# FASCICULE DE BREVET EUROPEEN

(11) **EP 1 406 073 B1**
(45) Date de publication et mention de la délivrance du brevet: **25.05.2005**
(21) Numéro de dépôt: 03354073.3
(22) Date de dépôt: 22.09.2003
(51) Int. Cl.: G01J 5/20

(54) **Détecteur bolométrique à antenne comportant un interrupteur et dispositif d'imagerie le comportant**
Antennengekoppelter, einen Schalter aufweisender, bolometrischer Detektor und auf solchen Detektoren basierendes Abbildungssystem
Antenna-coupled bolometric detector having a switch and imaging arrangement using it

(30) Priorité: 01.10.2002 FR 0212129
(43) Date de publication de la demande: 07.04.2004
(73) Titulaire: COMMISSARIAT A L'ENERGIE ATOMIQUE, 75752 Paris Cédex 16 (FR)
(72) Inventeur: Savry, Olivier, 38000 Grenoble (FR); Agnese, Patrick, 38000 Grenoble (FR)
(74) Mandataire: Hecke, G.

(56) Documents cités:
- WO-A-93/25877
- FR-A- 2 788 129
- FR-A- 2 818 795
- US-A- 6 028 312
- OSTERMAN D P ET AL: "ANTENNA-COUPLED BOLOMETER WITH A MICROMACHINED-BEAM THERMAL LINK" APPLIED PHYSICS LETTERS, AMERICAN INSTITUTE OF PHYSICS. NEW YORK, US, vol. 71, no. 16, 20 octobre 1997 (1997-10-20), pages 2361-2363, XP000725894 ISSN: 0003-6951

## Description

### Domaine technique de l'invention

L'invention concerne un détecteur bolométrique comportant au moins une antenne réceptrice destinée à recueillir des ondes électromagnétiques et prolongée par une charge résistive convertissant la puissance des ondes électromagnétiques en puissance calorifique, ladite charge résistive étant en contact avec un élément thermométrique détectant l'élévation de température relative à la puissance calorifique générée, ledit détecteur comportant également des moyens de modulation.

### État de la technique

Les détecteurs bolométriques à antenne sont généralement utilisés pour réaliser des caméras ou des systèmes d'imagerie capables de détecter passivement les longueurs d'onde submillimétriques et millimétriques. Cette gamme de longueurs d'onde permet de détecter des objets dans des conditions difficiles comme la nuit, le brouillard, la pluie, la fumée. Ainsi le document FR-A1-2788129 décrit un détecteur bolométrique à antenne comportant une charge résistive qui crée une puissance calorifique lorsque l'antenne détecte une onde électromagnétique millimétrique, la charge résistive étant la résistance de charge de l'antenne.

Ce type de détecteurs génère généralement un bruit important en basse fréquence, à la sortie d'un élément thermométrique destiné à mesurer l'élévation de température. Le bruit basse fréquence généré peut être limité en appliquant une modulation d'absorption à l'onde incidente. Le signal électrique détecté est alors translaté vers des fréquences plus hautes, ce qui a pour conséquence de faire travailler l'élément thermométrique et le système disposé en aval du détecteur, tel qu'un circuit électronique de traitement, dans une gamme de fréquences où ils sont moins bruyants.

Pour réaliser cette modulation, il est connu d'utiliser un chopper permettant de moduler l'onde incidente absorbée par les détecteurs d'un système d'imagerie. Le chopper est constitué d'une roue comportant des ouvertures périodiques, la roue étant entraînée par un moteur dont la fréquence de rotation est la fréquence à laquelle est translatée la réponse des détecteurs, limitant ainsi les bruits basse fréquence. Il présente cependant de nombreux inconvénients tels que celui de générer des vibrations mécaniques, d'être encombrant et de présenter une vitesse de rotation du moteur fluctuante.

### Objet de l'invention

L'invention a pour but un détecteur bolométrique à antenne permettant une modulation de manière à limiter les bruits basse fréquence, les moyens de modulation devant être peu encombrants, fiables et sans vibration.

Selon l'invention, ce but est atteint par le fait que les moyens de modulation comportent un interrupteur disposé entre l'antenne et la charge résistive, des moyens de commande provoquant périodiquement l'ouverture et la fermeture de l'interrupteur, à une fréquence de commutation prédéterminée.

Selon un développement de l'invention, les moyens de commande comportent des moyens de commutation thermiques.

Selon une autre caractéristique de l'invention, les moyens de commutation thermiques comportent un actionneur thermique à effet bilame.

Selon un mode de réalisation préférentiel, l'interrupteur réalisé sur un substrat, comporte un élément déformable, rattaché par ses deux extrémités au substrat et naturellement convexe par rapport celui-ci, un plot conducteur, disposé sur l'élément déformable, étant destiné à assurer le contact électrique entre l'antenne et la charge résistive, lorsque l'interrupteur est fermé, l'antenne et la charge résistive étant réalisés sur ledit substrat.

L'invention a également pour objet un dispositif d'imagerie comprenant au moins un tel détecteur bolométrique.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente, sous forme de schémas blocs, un détecteur selon l'invention.
La figure 2 illustre un mode de réalisation particulier d'un détecteur selon l'invention.
La figure 3 est une vue en coupe d'un détecteur selon l'invention.

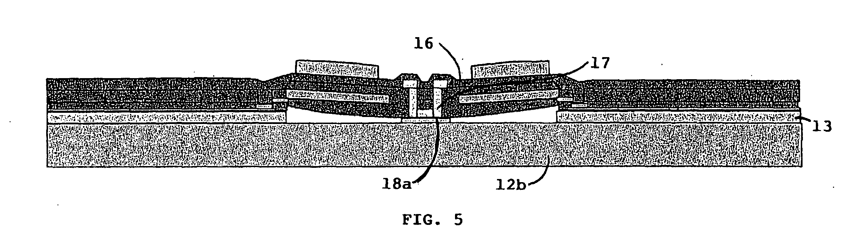

Les figures 4 et 5 sont des vues en coupe selon A-A d'un interrupteur du détecteur selon la figure 3, respectivement ouvert et fermé.

### Description de modes particuliers de réalisation.

Le détecteur bolométrique est réalisé par des technologies utilisées dans le domaine des semi-conducteurs. Il est réalisé sur un substrat, de préférence, en silicium.

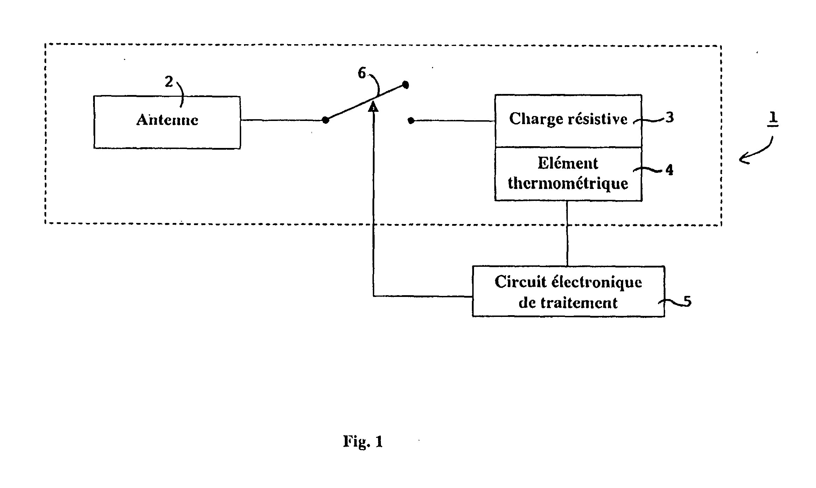

Sur la figure 1, un détecteur bolométrique à antenne 1, représenté par des traits pointillés sur la figure 1, comporte au moins une antenne réceptrice 2, métallique, plane et destinée à recueillir les ondes électromagnétiques, créant ainsi un signal électrique correspondant à la puissance électromagnétique des ondes électromagnétiques détectées. L'antenne 2 est connectée à une charge résistive 3 convertissant la puissance électromagnétique en puissance calorifique. Le courant, passant de l'antenne 2 à la charge résistive 3, crée un échauffement de celle-ci, par effet Joule, correspondant à une puissance calorifique dégagée par la charge résistive.

La charge résistive 2 est en contact avec un élément thermométrique 4, permettant à la puissance calorifique de se dissiper également dans l'élément thermométrique 4. L'élément thermométrique 4, de préférence constitué par une diode, est destiné à convertir l'élévation de température due à son échauffement en une variation de courant ou de tension. Ainsi, en l'absence de détection d'ondes électromagnétiques, l'élément thermométrique 4 est parcouru par un courant de référence, le courant de référence correspondant à la température de l'élément thermométrique 4 en l'absence d'échauffement.

Lorsqu'une onde électromagnétique est détectée, l'élément thermométrique 4 s'échauffe et le courant qui le parcourt diffère du courant de référence. Un circuit électronique de traitement 5 connecté à l'élément thermométrique 4 détecte et analyse la variation de courant parcourant l'élément thermométrique 4 et donc la variation de température due à l'échauffement de l'élément thermométrique 4.

Le détecteur bolométrique 1 comporte un interrupteur 6 disposé entre l'antenne 2 et la charge résistive 3. Des moyens de commande provoquent périodiquement l'ouverture et la fermeture de l'interrupteur 6, à une fréquence de commutation prédéterminée. L'interrupteur étant fermé, le courant électrique généré par les ondes électromagnétiques détectées passe de l'antenne vers la charge résistive. Les moyens de commande peuvent être de tout type connu et comportent des moyens de commutation qui peuvent être, par exemple, électrostatiques, thermiques ou électromagnétiques, et qui sont contrôlés par le circuit électronique de traitement 5 (figure 1).

L'interrupteur 6 s'ouvrant et se fermant périodiquement, permet de moduler en amplitude le signal électrique transmis à la charge résistive 3, de manière à limiter le bruit basse fréquence reçu par un dispositif disposé en aval du détecteur, comme le circuit électronique de traitement 5. La fréquence de commutation de l'interrupteur est inférieure à la fréquence de coupure thermique du détecteur. En effet, une variation thermique se produisant à une fréquence supérieure à la fréquence de coupure thermique du détecteur, ne peut être détectée. La fréquence de coupure thermique est égale au rapport C/R, C étant la capacité calorifique de l'élément thermométrique et R la résistance thermique de la charge résistive. La fréquence de commutation de l'interrupteur 6 est, de préférence, de l'ordre de quelques dizaines à quelques centaines de Hertz.

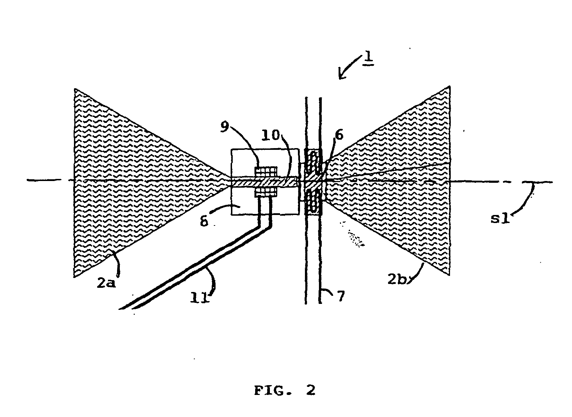

Selon un mode particulier de réalisation représenté sur la figure 2, le détecteur bolométrique 1, réalisé sur un substrat en silicium (non représenté sur la figure 2), comporte deux éléments métalliques plans opposés correspondant à une première et une seconde antennes réceptrices 2a et 2b, triangulaires sur la figure 2. Elles sont disposées de part et d'autre d'une partie centrale évidée 8, selon un axe de symétrie s1.

Un bras 10, de préférence métallique, sous forme de poutre, constituant la charge résistive du détecteur, est suspendu au-dessus de la partie centrale évidée 8 selon l'axe s1. Il comporte une première extrémité, connectée directement à la première antenne 2a et une seconde extrémité, connectée à la seconde antenne 2b, par l'intermédiaire d'un interrupteur 6. Des électrodes 7 relient l'interrupteur 6 au circuit électronique de traitement 5 qui provoque périodiquement l'ouverture et la fermeture de l'interrupteur 6, de manière à moduler le signal électrique généré par les antennes, avant son entrée dans la charge résistive.

Une diode 9 est montée sur le bras 10, au-dessus de la partie centrale évidée 8, en contact thermique avec la charge résistive constituée par le bras 10. Ainsi, lorsque le bras 10 reçoit le signal électrique correspondant à l'onde détectée, il s'échauffe et cet échauffement est transmis à la diode 9, provoquant une variation de courant ou de tension dans la diode 9. La diode 9 est connectée à des bornes 11 la reliant au circuit électronique de traitement 5, qui mesure et analyse la variation de courant ou de tension générée par l'échauffement.

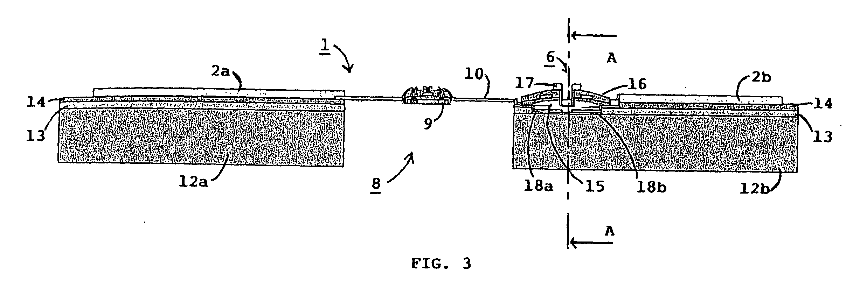

Sur la figure 3, le détecteur bolométrique 1 est réalisé sur un substrat en silicium 12, divisé en deux parties 12a et 12b chacune destinée à supporter une antenne réceptrice. Les deux parties 12a et 12b sont séparées par la partie centrale évidée 8. La première partie 12a est totalement recouverte par une première couche 13 d'oxyde de silicium, elle même recouverte d'une seconde couche 14 de silicium épitaxié, la première antenne 2a étant disposée sur la seconde couche 14. La seconde partie 12b du substrat est recouverte par les première et seconde couches 13 et 14, dans lesquelles est formée une cavité 15 sur laquelle est disposé l'interrupteur 6. La seconde antenne 2b, disposée sur la seconde couche 14, est adjacente à l'interrupteur 6. Celui-ci est ainsi disposé entre la seconde antenne 2b et la partie centrale évidée 8.

Les deux parties 12a et 12b du substrat sont reliées par le bras 10 formant une poutre et supportant la diode 9 au-dessus de la partie centrale évidée 8. Une première extrémité libre du bras 10 est disposée entre la seconde couche 14 de la première partie 12a du substrat et la première antenne 2a, tandis que la seconde extrémité libre du bras 10 est connectée à une première borne de connexion 18a de l'interrupteur 6, disposée au fond de la cavité 15. La seconde antenne 2b est également connectée à une seconde borne de connexion 18b de l'interrupteur 6, disposée au fond de la cavité 15, de manière à ce que les première et seconde bornes de connexion 18a et 18b, soient séparées par un espace d'une largeur prédéterminée.

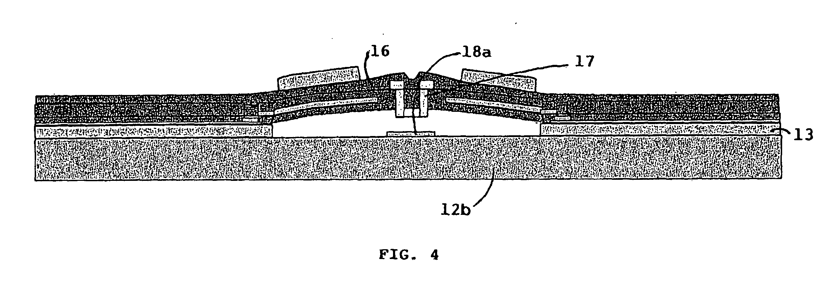

L'interrupteur 6 comporte, de préférence, un élément déformable 16, rattaché par ses deux extrémités à la première couche 13. L'élément déformable est naturellement convexe par rapport au plan du substrat 12. Un plot conducteur 17 est disposé dans la partie convexe de l'élément déformable 16, du côté de la cavité 15. Les moyens de commutation permettent à l'élément déformable 16 de passer périodiquement d'un premier état (figure 3) correspondant à sa forme naturellement convexe à un second état (figure 4). Le second état de l'élément déformable 16 permet au plot conducteur 17 d'assurer le contact électrique entre les bornes de connexion 18a et 18b, et en conséquence entre la seconde antenne 2b et le bras métallique 10. L'espace compris entre les deux bornes de connexion 18a et 18b est inférieur ou égal à la largeur du plot 17.

La commutation de l'interrupteur peut être réalisée par tout type de moyens connus. Un actionneur thermique à effet bilame, tels que les micro-dispositifs à actionneur thermique à effet bilame décrits dans les documents FR-A1-2818795 et FR-A1-2772512, peut par exemple être utilisé pour provoquer l'ouverture et la fermeture périodique de l'interrupteur. Sur la figure 2, les électrodes 7 sont constituées par des serpentins constituant des éléments chauffants.

Selon un autre mode de réalisation, l'élément déformable 16 est en matériau magnétique et une bobine est disposée sur le substrat 12, de manière à provoquer, par des moyens de commutation électromagnétiques, l'ouverture et la fermeture périodique de l'interrupteur.

Dans une autre variante de réalisation, le plot 17 peut être attiré électrostatiquement par une partie de la seconde antenne 2b.

L'utilisation d'un interrupteur du type de ceux décrits ci-dessus permet de moduler le signal électrique envoyé à la charge résistive, tout en présentant l'avantage d'être intégré au détecteur bolométrique, le rendant peu encombrant. Ce type d'interrupteur n'étant pas mécanique, il ne crée pas de vibration gênante pour le fonctionnement du détecteur et est très fiable.

L'interrupteur permet également de limiter le bruit à très basse fréquence inhérent à un pixel et permet d'intervenir sur la fluctuation de la tension d'offset (ou tension de décalage). Il n'est alors pas nécessaire d'utiliser de rideau obturant optiquement pour éliminer cette fluctuation, ce qui présente l'avantage d'éliminer un système mécanique embarqué.

Un dispositif d'imagerie comportant au moins un détecteur bolométrique tel que ceux décrits ci-dessus, présente l'avantage de détecter des objets dans des conditions difficiles, tout en limitant le bruit basse fréquence engendré par le détecteur. Le dispositif d'imagerie peut également comporter une matrice de détecteurs bolométriques.

L'invention n'est pas limitée aux modes de réalisation décrits ci-dessus. Plusieurs détecteurs bolométriques peuvent être disposés de manière à ce que leurs diodes respectives soient montées en parallèle, formant ainsi une matrice de détecteurs utilisée dans un système d'imagerie, ce qui peut permettre d'élargir la gamme de longueurs d'onde détectées.

## Revendications

1. Détecteur bolométrique comportant au moins une antenne réceptrice (2) destinée à recueillir des ondes électromagnétiques et prolongée par une charge résistive (3) convertissant la puissance des ondes électromagnétiques en puissance calorifique, ladite charge résistive (3) étant en contact avec un élément thermométrique (4) détectant l'élévation de température relative à la puissance calorifique générée, ledit détecteur comportant également des moyens de modulation, détecteur **caractérisé en ce que** les moyens de modulation comportent un interrupteur (6) disposé entre l'antenne (2) et la charge résistive (3), des moyens de commande provoquant périodiquement l'ouverture et la fermeture de l'interrupteur (6), à une fréquence de commutation prédéterminée.

2. Détecteur bolométrique selon la revendication 1, **caractérisé en ce que** les moyens de commande comportent des moyens de commutation électrostatiques.

3. Détecteur bolométrique selon la revendication 1, **caractérisé en ce que** les moyens de commande comportent des moyens de commutation thermiques.

4. Détecteur selon la revendication 3, **caractérisé en ce que** les moyens de commutation thermiques comportent un actionneur thermique à effet bilame.

5. Détecteur bolométrique selon la revendication 1, **caractérisé en ce que** les moyens de commande comportent des moyens de commutation électromagnétiques.

6. Détecteur bolométrique selon l'une quelconque des revendications 2 à 5, **caractérisé en ce que** l'interrupteur (6) réalisé sur un substrat (12), comporte un élément déformable (16), rattaché par ses deux extrémités au substrat (12) et naturellement convexe par rapport celui-ci, un plot conducteur (17), disposé sur l'élément déformable (16), étant destiné à assurer le contact électrique entre l'antenne (2) et la charge résistive (3), lorsque l'interrupteur (6) est fermé, l'antenne (2) et la charge résistive (3) étant réalisés sur ledit substrat (12).

7. Détecteur selon les revendications 5 et 6, **caractérisé en ce que** l'élément déformable (16) étant magnétique, les moyens de commutation comportent une bobine disposée sur le substrat (12).

8. Détecteur selon l'une quelconque des revendications 1 à 7, **caractérisé en ce que** la fréquence de commutation est inférieure à la fréquence de coupure thermique du détecteur.

9. Détecteur selon l'une quelconque des revendications 1 à 8, **caractérisé en ce que** l'élément thermométrique (4) est une diode (9).

10. Dispositif d'imagerie comprenant au moins un détecteur bolométrique **caractérisé en ce que** le détecteur bolométrique est un détecteur selon l'une quelconque des revendications 1 à 9.

11. Dispositif d'imagerie selon la revendication 10, **caractérisé en ce qu'**il comporte une matrice de détecteurs bolométriques.

## Patentansprüche

1. Bolometrischer Messfühler, der mindestens eine Empfangsantenne (2) aufweist, die dazu bestimmt ist, elektromagnetische Wellen aufzufangen und durch eine ohmsche Last (3) verlängert ist, welche die Leistung der elektromagnetischen Wellen in Heizleistung umwandelt, welche ohmsche Last (3) in Kontakt mit einem thermometrischen Element (4) steht, das den Anstieg der Temperatur bezogen auf die erzeugte Heizleistung misst, welcher Messfühler ferner Modulationsmittel umfasst, ein Messfühler, der **dadurch gekennzeichnet ist, dass** die Modulationsmittel einen Schalter (6) umfassen, der zwischen die Antenne (2) und die ohmsche Last (3) geschaltet ist, wobei Steuerungsmittel den Schalter (6) in periodischen Abständen mit einer vorbestimmten Umschaltfrequenz auf- und zusteuern.

2. Bolometrischer Messfühler nach Anspruch 1, **dadurch gekennzeichnet, dass** die Steuerungsmittel elektrostatische Umschaltmittel umfassen.

3. Bolometrischer Messfühler nach Anspruch 1, **dadurch gekennzeichnet, dass** die Steuerungsmittel thermische Umschaltmittel umfassen.

4. Messfühler nach Anspruch 3, **dadurch gekennzeichnet, dass** die thermischen Umschaltmittel ein Bimetall-Thermo-Stellglied umfassen.

5. Bolometrischer Messfühler nach Anspruch 1, **dadurch gekennzeichnet, dass** die Steuerungsmittel elektromagnetische Umschaltmittel umfassen.

6. Bolometrischer Messfühler nach einem der Ansprüche 2 bis 5, **dadurch gekennzeichnet, dass** der auf einem Substrat (12) angebrachte Schalter (6) ein verformbares Element (16) umfasst, das mit seinen beiden Enden am Substrat (12) befestigt ist und bezüglich diesem natürlicherweise konvex ist, wobei ein auf dem verformbaren Element (16) angeordneter leitender Kontakt (17) vorgesehen ist, um den elektrischen Kontakt zwischen der Antenne (2) und der ohmschen Last (3) sicherzustellen, wenn der Schalter (6) geschlossen ist, wobei die Antenne (2) und die ohmsche Last (3) auf dem genannten Substrat ausgeführt (12) sind.

7. Messfühler nach Anspruch 5 und 6, **dadurch gekennzeichnet, dass**, wobei das verformbare Element (16) magnetisch ist, die Umschaltmittel eine auf dem Substrat (12) angeordnete Spule umfassen.

8. Messfühler nach einem der Ansprüche 1 bis 7, **dadurch gekennzeichnet, dass** die Umschaltfrequenz geringer ist als die thermische Grenzfrequenz des Messfühlers.

9. Messfühler nach einem der Ansprüche 1 bis 8, **dadurch gekennzeichnet, dass** das thermometrische Element (4) eine Diode (9) ist.

10. Bildgebungsvorrichtung, die mindestens einen bolometrischen Messfühler umfasst, **dadurch gekennzeichnet, dass** der bolometrische Messfühler ein Messfühler nach einem der Ansprüche 1 bis 9 ist.

11. Bildgebungsvorrichtung nach Anspruch 10, **dadurch gekennzeichnet, dass** sie eine Matrix bolometrischer Messfühler umfasst.

## Claims

1. Bolometric detector comprising at least one receiver antenna (2) designed to collect electromagnetic waves and extended by a resistive load (3) converting the power of the electromagnetic waves into calorific power, said resistive load (3) being in contact with a thermometric element (4) detecting the temperature rise relating to the calorific power generated, said detector also comprising modulating means, detector **characterized in that** the modulating means comprise a switch (6) arranged between the antenna (2) and the resistive load (3), control means periodically causing opening and closing of the switch (6) at a preset switching frequency.

2. Bolometric detector according to claim 1, **characterized in that** the control means comprise electrostatic switching means.

3. Bolometric detector according to claim 1, **characterized in that** the control means comprise thermal switching means.

4. Detector according to claim 3, **characterized in that** the thermal switching means comprise a bimetal effect thermal actuator.

5. Bolometric detector according to claim 1, **characterized in that** the control means comprise electromagnetic switching means.

6. Bolometric detector according to any one of the claims 2 to 5, **characterized in that** the switch (6), achieved on a substrate (12), comprises a deformable element (16), attached via its two ends to the substrate (12) and naturally convex with respect to the latter, a conducting pad (17) arranged on the deformable element (16) being designed to perform the electrical contact between the antenna (2) and the resistive load (3) when the switch (6) is closed, the antenna (2) and resistive load (3) being achieved on said substrate (12).

7. Detector according to claims 5 and 6, **characterized in that** the deformable element (16) being magnetic, the switching means comprise a coil arranged on the substrate (12).

8. Detector according to any one of the claims 1 to 7, **characterized in that** the switching frequency is lower than the thermal cut-off frequency of the detector.

9. Detector according to any one of the claims 1 to 8, **characterized in that** the thermometric element (4) is a diode (9).

10. Imaging device comprising at least one bolometric detector **characterized in that** the bolometric detector is a detector according to any one of the claims 1 to 9.

11. Imaging device according to claim 10, **characterized in that** it comprises a matrix of bolometric detectors.
